## Europäisches Patentamt
## European Patent Office
## Office européen des brevets

(19)

(11) Veröffentlichungsnummer : **0 214 337**
**B1**

(12) # EUROPÄISCHE PATENTSCHRIFT

(45) Veröffentlichungstag der Patentschrift :
**17.08.88**

(51) Int. Cl.⁴ : **B 60 R 1/06**

(21) Anmeldenummer : **85111602.0**

(22) Anmeldetag : **13.09.85**

---

(54) **Durch einen Handhebel verstellbarer Fahrzeug-Aussenspiegel.**

---

(43) Veröffentlichungstag der Anmeldung :
**18.03.87 Patentblatt 87/12**

(45) Bekanntmachung des Hinweises auf die Patenterteilung : **17.08.88 Patentblatt 88/33**

(84) Benannte Vertragsstaaten :
**AT BE CH DE FR GB IT LI LU NL SE**

(56) Entgegenhaltungen :
**DE-A- 3 139 416**
**FR-A- 2 506 236**
**GB-A- 2 116 923**
**US-A- 4 523 736**

(73) Patentinhaber : **HOHE KG**
**Hauptstrasse 36**
**D-6981 Collenberg (DE)**

(72) Erfinder : **Gillet, Jean-Luc**
**Bahnhofstrasse 2**
**D-6981 Collenberg (DE)**

(74) Vertreter : **Zinngrebe, Horst, Dr.rer.nat.**
**Saalbaustrasse 11**
**D-6100 Darmstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 214 337 B1

## Beschreibung

Die Erfindung betrifft einen Außenspiegel für ein Fahrzeug mit einem Gehäuse, an dessen offener Rückseite ein Spiegelglas befestigt und das an einem am Fahrzeug montierbaren Fuß verschwenkbar gehalten ist, wobei ein Handgriff über ein gebogenes Verbindungsstück mit einem langgestreckten Stiel verbunden ist, der sich durch eine Öffnung einer Kugel-Kalotte des Fußes und einen Schlitz in einer hohlen, an einer Gehäuseseitenwand vorgesehenen Hohlkugel um seine Längsachse drehbar erstreckt, ein Paßstück formschlüssig durchdringt, sich auf dem auf der Innenfläche der Kalotte reitenden Paßstück federnd abstützt und am freien Ende ein das Gehäuse innen erfassendes Gegenstück trägt.

Bei dem aus der deutschen Offenlegungsschrift 31 39 416 und gemäß dem Oberbegriff des Anspruches 1 bekannten Außenspiegel ist die Halbkugel aus einer Platte herausgeformt, die bei der Montage des Spiegels an der dem Spiegelfuß zugewandten Seitenwand des Spiegelgehäuses befestigt werden muß. Ferner ist eine Zugfeder-Verankerung erforderlich, die einerseits das Spiegelgehäuse an der Halbkugel erschütterungsfrei festlegt und andererseits ermöglicht, daß das Spiegelgehäuse, wie vorgeschrieben, in Fahrtrichtung nach hinten und nach vorne gegen Federdruck abgeklappt werden kann. Der Zusammenbau des bekannten Außenspiegels ist daher relativ zeitaufwendig und erfordert die genaue Montage relativ vieler Einzelteile.

Mit der Erfindung soll ein Außenspiegel geschaffen werden, der bei gleicher Funktion wie der bekannte Außenspiegel leichter und mit weniger Einzelteilen zusammengesetzt werden kann.

Bei dem eingangs genannten Außenspiegel ist dazu erfindungsgemäß vorgesehen, daß das freie Ende quer zur Längsachse nach vorne verbreitert ist und gegen eine innere Gehäusewand an wenigstens zwei Stellen unter Federdruck anliegt, von denen die erste Stelle in der Längsachse und die zweite Stelle relativ zur Längsachse nach vorne versetzt ist. Damit entfallen die bisher am Gehäuseboden zu verankernden Zugfedern, so daß sich die Montage entsprechend vereinfacht.

In zweckmäßiger Ausgestaltung der Erfindung ist die Halbkugel mit dem Gehäuse ein einteiliges Bauteil, das zweckmäßig im Spritzverfahren hergestellt werden kann.

Eine besonders einfache Ausführungsform der Erfindung sieht vor, daß die Gehäuseinnenwand sich in den Hohlraum der Halbkugel erstreckt, wobei das verbreiterte Ende durch eine Feder gegen die Gehäuseinnenwand gedrückt ist. Zweckmäßig kann dann das freie Ende mit einem die Gehäuseinnenwand durchsetzenden Anker verbunden sein, der das Gegenstück trägt, wobei eine Feder zwischen dem Gegenstück und der Gehäuseinnenwand vorgesehen ist. Eine definierte Verschwenkung des Gehäuses nach vorne oder hinten wird dann erreicht, wenn das freie Ende als Gabel ausgebildet ist, deren Enden in Pfannen der Gehäuseinnenwand eingreifen. Schließlich kann das Gehäuse in einer nach hinten an die Fahrzeugkarosserie abgeklappten Stellung gehalten werden, wenn aus der Innenfläche der Halbkugel eine in den Weg des außerhalb der Längsachse liegenden Gabelendes ragende Nase vorsteht.

Die Erfindung wird nachstehend anhand des in der beigefügten Zeichnung dargestellten Ausführungsbeispiels im einzelnen beschrieben. Es zeigen :

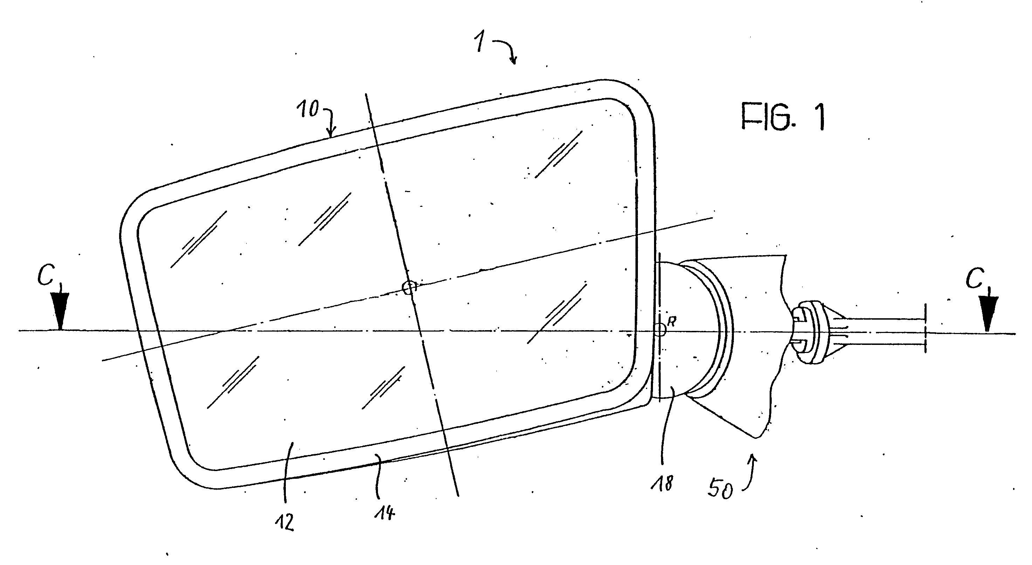

Fig. 1 eine Ansicht von hinten eines Fahrzeugs-Außenspiegels ;

Fig. 2 eine Schnittansicht des Außenspiegels nach Fig. 1 längs der Linie C-C ;

Fig. 3 eine Schnittansicht des Außenspiegels nach Fig. 2 längs der Linie E-E ; und

Fig. 4 eine schematische Draufsicht auf den Außenspiegel.

Der nachfolgend beschriebene Außenspiegel ist eine Verbesserung desjenigen Kraftfahrzeug-Außenrückspiegels, der in der deutschen Offenlegungsschrift 31 39 416 beschrieben ist. Daher wird ergänzend zu dem Nachfolgenden auf diese Druckschrift Bezug genommen.

Der Außenspiegel 1 besitzt ein nach hinten offenes und im übrigen bis auf die Verankerung am Fuß allseits geschlossenes Gehäuse 10 aus Hartkunststoff. An der offenen Rückseite ist eine rückseitig verspiegelte Glasplatte 12 durch einen dichtenden Randwulst 14 gehalten.

Aus der Seitenwand 16 des Gehäuses 10, die dem Spiegelfuß 50 zugewandt ist, steht eine hohle Halbkugel 18 vor, die in einer Kalotte 52 des Spiegelfußes 50 in noch zu beschreibender Weise gehalten ist. In das Innere der Halbkugel 18 erstreckt sich eine Innenwand 20 des Gehäuses 10, in deren der Halbkugel 18 zugewandten Oberfläche 22 eine erste Lagerschale 24 und eine gegenüber dieser nach vorne versetzte zweite Lagerschale 26 ausgebildet sind. Zwischen den beiden Lagerschalen 24, 26 ist in die Innenwand 20 eine Bohrung 28 eingebracht, die an der der Oberfläche 22 gegenüberliegenden Seite von einer Ringschulter 30 umgeben ist. Das Gehäuse 10, die Halbkugel 18 und die Innenwand 20 sind ein einteiliges Kunststoffteil, das beispielsweise im Spritzguß hergestellt ist.

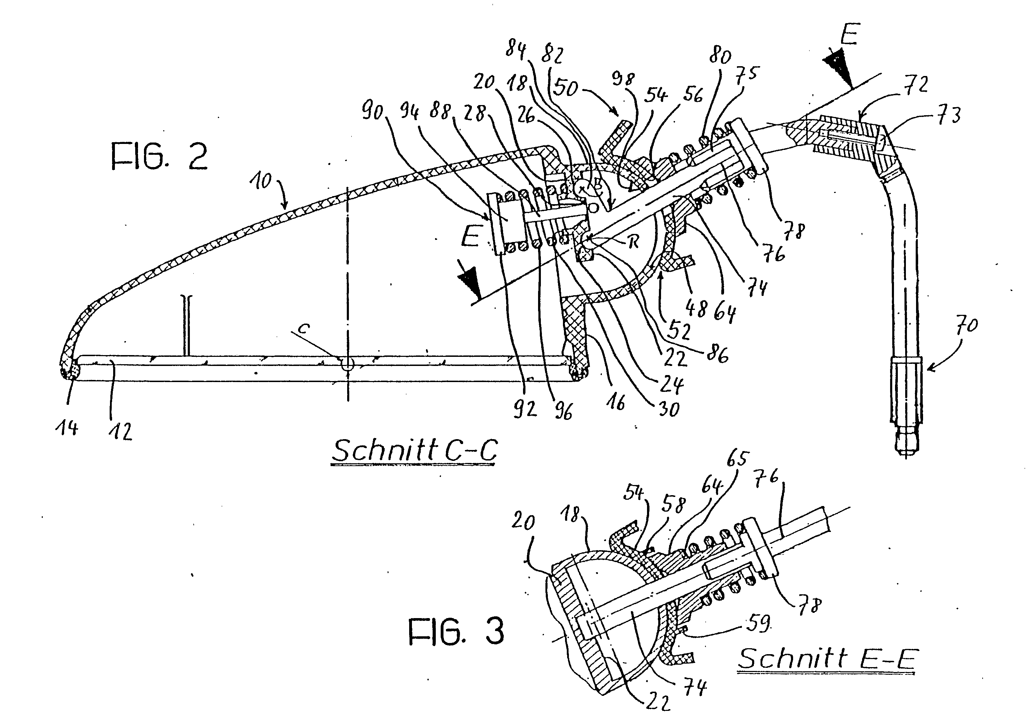

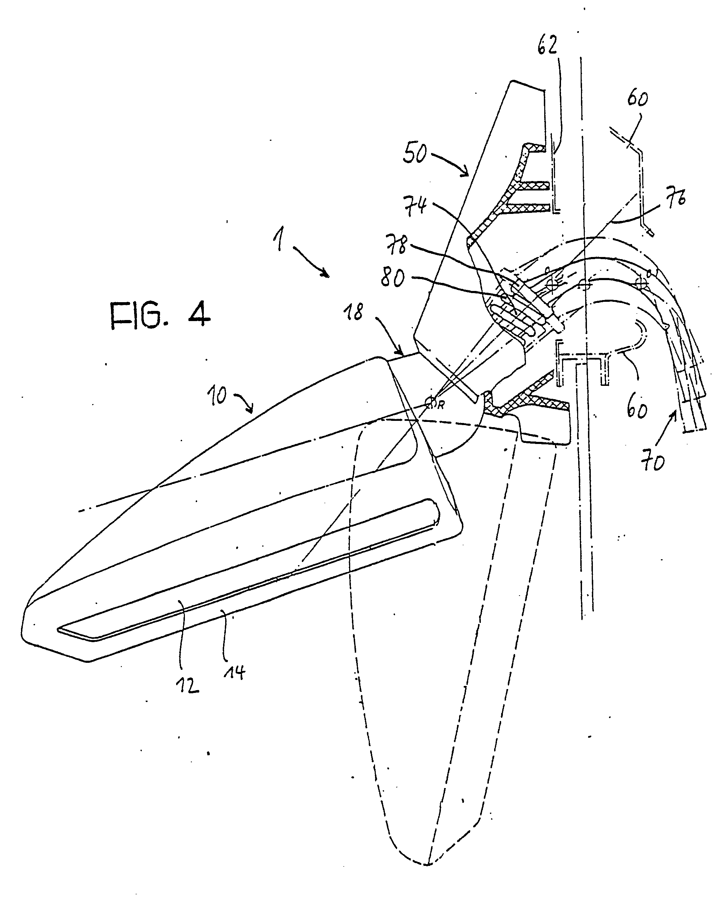

Der Spiegelfuß 50 kann in an sich bekannter Weise beispielsweise im vorderen Dreieck des linken vorderen Türrahmens eines Fahrzeugs, der in Fig. 4 mit 60, 62 strichpunktiert angedeutet ist, montiert werden und ist nur in dem für das Verständnis der Erfindung erforderlichen Umfang hier dargestellt und beschrieben. Der Spiegelfuß 50 ist gemäß Fig. 4 im wesentlichen hohl und mündet in Richtung auf das Spiegelgehäuse 10 in einer nach schräg rückwärts orientierten Kalotte 52. Aus der Innenfläche 54 der Kalotte stehen gemäß Fig. 3 beiderseits einer zentralen Durchgangsöffnung 56 der Kalotte mit jeweils gleichem Abstand zwei Stege 58, 59 vor, die die Drehbewegung eines Paßstückes 64 begrenzen, welches auf der Innenfläche 54 zwischen den Stegen 58, 59 reitet.

Ein Handgriff 70 ist über ein gebogenes Verbindungsstück 72 mit einem langgestreckten Stiel 74 verbunden. Der Handgriff 70, das Verbindungsstück 72 und der Stiel 74 können entweder aus einem einzigen Bauteil bestehen, oder, wie in Fig. 2 dargestellt, durch Verschrauben bei 73 oder Verklemmen bei 75 dauerhaft miteinander verbunden sein. Da der Handgriff sich bei an das Fahrzeug anmontiertem Außenspiegel 1 in das Innere des Fahrzeugs erstrecken und von dort zur Verstellung des Außenspiegels bedienbar sein soll, beträgt der zwischen der Längsachse 76 des Stieles 74 und dem Handgriff 70 eingeschlossene Winkel ungefähr 60° und die durch diesen Winkel definierte Ebene liegt ungefähr quer zur Ebene des Spiegels 12.

Der Stiel 74 durchdringt das Paßstück 64 mittig und erstreckt sich durch die Öffnung 56 der Kalotte 52 und einen Längsschlitz 48, der in die Halbkugel 18 geschnitten ist. Zwischen der von der Innenfläche 54 der Kalotte 52 wegweisenden Außenfläche 65 des Paßstückes 64 und einem am Stiel 74 befestigten radial vorstehenden Kranz 78 ist eine Feder 80 beherbergt. Über die Feder 80 stützt sich der Stiel 74 auf dem Paßstück 64 ab. Dabei durchsetzt der Stiel 74 das Paßstück 64 formschlüssig dergestalt, daß das Paßstück 64 einer Drehung des Stieles 74 um seine Längsachse 76 folgt, soweit dies die zum Paßstück 64 beabstandeten Stege 58, 59 zulassen.

Am freien Ende 82 des Stiels 74 ist ein nach vorne abstehender Arm 84 derart ausgebildet, daß das ballige Ende des Armes 84 in die zweite Lagerschale 26 und das ballig geformte, auf die Längsachse 76 ausgerichtete Ende 86 des Stieles 74 in die erste Lagerschale 24 eingreifen können. Ein mittlerer Abschnitt des Armes 84 hält schwenkbar einen Anker 88, der sich durch die Bohrung 28 erstreckt und in einem Gegenstück 90 endet. Das Gegenstück 90 besitzt eine radial vorspringende Ringschulter 92 und einen Kern 94. Eine weitere Feder 96 stützt sich an einem Ende auf der der Fläche 22 gegenüberliegenden Seite der Innenwand 20, die Ringschulter 30 umgebend ab und liegt mit dem anderen Ende gegen die Ringschulter 92, den Kern 94 umfassend. Die Federn 80 und 96 halten danach die Halbkugel 18 und damit das Gehäuse 10 am Spiegelfuß 50 fest, ermöglichen jedoch sowohl eine Verstellung des Spiegels 12 wie auch ein Verschwenken des Gehäuses 10 nach vorne oder hinten.

Eine Verstellung des Spiegels 12 um eine in der Zeichenebene der Fig. 2 liegende Achse kann durch Verschwenken des Handgriffes 70 quer zur Papierebene erreicht werden, wobei der Stiel um seine Längsachse 76 dreht und das Gehäuse 10 vermöge des Eingriffs des Armes 84 und des Endes 86 in die beiden Lagerschalen 24, 26 dieser Drehung folgt. Das Ausmaß dieser Verstellung wird begrenzt durch Anschlag des Paßstückes 64 an die beiden Stege 58, 59. Eine Verstellung des Spiegels 12 um eine senkrecht zur Papierebene stehende Achse wird durch Zug oder Druck auf den Handgriff 70 in der Papierebene bewirkt, wodurch das Paßstück 64 auf der Innenfläche 54 soweit zwischen den Stegen 58, 59 reitet, wie es die Größe der Öffung 56 zuläßt.

Das Verschwenken des Spiegelgehäuses 10 nach hinten erfolgt um den Mittelpunkt R des Endes 74 und der ersten Lagerschale 24, welcher in der Längsachse 76 liegt, so daß die Halbkugel 18 bei diesem nach Rückwärtsklappen des Gehäuses 10 in der Kalotte 52 eingefangen bleibt. Das Gehäuse 10 kann soweit nach rückwärts an die Fahrzeugkarosserie herangeklappt werden, wie das die Länge des Längsschlitzes 48 zuläßt. Dabei befreit sich das ballige Ende des Armes 84 aus der zweiten Lagerschale 26, wobei die Feder 96 zusammengedrückt wird. Wenn das Ende des Armes 84 über die aus der Innenfläche der Halbkugel 18 in seinen Weg vorstehenden Nase 98 hinaus geglitten ist, bleibt das Ende des Armes 84 hinter der Nase 98 lösbar eingefangen, so daß das Gehäuse 10 in dem an die Fahrzeugkarosserie abgeklappten Zustand gehalten bleibt. Wenn der Arm 84 die Nase 98 wieder überwunden hat, klappt das Gehäuse 10 unter der Wirkung der Feder 96 automatisch in die in Fig. 2 dargestellte Betriebsstellung.

Beim Abklappen des Gehäuses nach vorne liegt der Schwenkpunkt B im Mittelpunkt des balligen Endes des Armes 84. Unter Zusammendrücken der Feder 96 löst sich jetzt die Halbkugel 18 aus der Kalotte 52, und das Gehäuse 10 kehrt unter entsprechender Entspannung der Feder 96 wieder in die in Fig. 2 dargestellte Normallage zurück, wenn die das Gehäuse 10 nach vorne abklappende Krafteinwirkung endet.

## Patentansprüche

1. Außenspiegel (1) für ein Fahrzeug mit einem Gehäuse (10), an dessen offener Rückseite ein Spiegelglas (12) befestigt und das an einem am Fahrzeug montierbaren Fuß (50) verschwenkbar gehalten ist, wobei ein Handgriff (70) über ein gebogenes Verbindungsstück (72) mit einem langgestreckten Stiel (74) verbunden ist, der sich durch eine Öffnung (56) einer Kugel-Kalotte (52) des Fußes und einen Schlitz in einer hohlen, an einer Gehäuseseitenwand (16) vorgesehenen Halbkugel (18) um seine Längsachse (76) drehbar erstreckt, ein Paßstück (64) formschlüssig durchdringt, sich auf dem auf einer Innenfläche (54) der Kalotte (52) reitenden Paßstück (64) federnd abstützt und am freien Ende (82, 86) ein das Gehäuse (10) innen erfassendes Gegenstück trägt, dadurch gekennzeichnet, daß das freie Ende (82) quer zur Längsachse (76) von der Seite her verbreitert ist und gegen eine innere Gehäusewand (20) an wenigstens zwei Stellen (24, 26) unter Federdruck anliegt, von denen die erste Stelle (24) in der Längsachse (76) und die zweite Stelle (26) relativ zur Längsachse von der Seite her versetzt ist.

2. Spiegel nach Anspruch 1, dadurch gekennzeichnet, daß die Halbkugel (18) mit dem Gehäuse (10) ein einteiliges Bauteil ist.

3. Spiegel nach Anspruch 1 oder 2, dadurch gekennzeichnet, daß die Gehäuseinnenwand (20) sich in den Hohlraum der Halbkugel (18) erstreckt, gegen welche das verbreiterte Ende (84) durch eine Feder (96) gedrückt ist.

4. Spiegel nach einem der vorstehenden Ansprüche, dadurch gekennzeichnet, daß das freie Ende (82) mit einem die Gehäuseinnenwand (20) durchsetzenden Anker (88) verbunden ist, welcher das Gegenstück (90) trägt, wobei eine Feder (96) zwischen Gehäuseinnenwand (20) und Gegenstück (90) vorgesehen ist.

5. Spiegel nach einem der vorstehenden Ansprüche, dadurch gekennzeichnet, daß das freie Ende als Gabel (84) ausgebildet ist, deren Enden in Pfannen (24, 26) der Gehäuseinnenwand (20) eingreifen.

6. Spiegel nach einem der vorstehenden Ansprüche, dadurch gekennzeichnet, daß aus der Innenfläche der Halbkugel (18) eine in den Weg des relativ zur Längsachse (76) nach vorne versetzten Gabelendes (84) ragende Nase (98) vorsteht.

**Claims**

1. Exterior mirror (1) for a vehicle with a housing (10), to the open rear whereof a mirror glass (12) is attached and which is held so as to swing on a base (50) attachable to the vehicle, whereby a handle (70) is connected by means of a bent connecting piece (72) to an elongate support (74), which is rotatable around its longitudinal axis (76), extends through an opening (56) of a spherical bearing (52) of the base and a slot in a hollow hemisphere (18) provided on one housing side wall (16), passes through an intermediate element (64) positively engaging therewith, is supported resiliently on the intermediate element (64) resting on an inside surface (54) of the bearing (52), and at the free end (82, 86) carries a counterpart which engages the inside of the housing (10), characterised in that the free end (82) is widened transversely of the longitudinal axis (76) from the side and rests under spring pressure against an inner housing wall (20) at at least two points (24, 26), whereof the first point (24) is offset in the direction of the longitudinal axis (76) and the second point (26) is laterally offset relative to the longitudinal axis.

2. Mirror according to Claim 1, characterised in that the hemisphere (18) forms a single component with the housing (10).

3. Mirror according to Claim 1 or 2, characterised in that the inner housing wall (20) extends into the cavity of the hemisphere (18) against which the widened end (84) is pressed by means of a spring (96).

4. Mirror according to one of the preceding claims, characterised in that the free end (82) is connected to an anchor (88) passing through the inner housing wall (20), which anchor carries the counterpart (90), whereby a spring (96) is provided between inner housing wall (20) and counterpart (90).

5. Mirror according to one of the preceding claims, characterised in that the free end is shaped like a fork (84), the ends whereof engage in recesses (24, 26) of the inner housing wall (20).

6. Mirror according to one of the preceding claims, characterised in that a nose (98), projecting in the path of the fork end (84) offset forwards relative to the longitudinal axis (76), projects from the inside surface of the hemisphere (18).

**Revendications**

1. Rétroviseur extérieur (1) pour un véhicule, comprenant un corps (10), sur le côté arrière ouvert duquel est fixé un verre de rétroviseur (12) et qui est maintenu pivotant sur un pied (50) pouvant être monté sur le véhicule, une poignée (70) étant reliée, par l'intermédiaire d'une pièce de liaison courbe (72), à une tige allongée (74) qui s'étend de manière pivotante autour de son axe longitudinal (76) à travers une ouverture (56) d'une calotte sphérique (52) du pied et d'une fente dans un hémisphère creux (18) prévu sur une paroi latérale de corps (16), traverse une pièce d'adaptation (54) de manière solidaire, prend appui de manière élastique sur la pièce d'adaptation (64) se déplaçant sur une face intérieure (54) de la calotte (52) et supporte, à l'extrémité libre (82, 85), une pièce antagoniste entourant intérieurement le corps (10), caractérisé en ce que l'extrémité libre (82), s'élargit depuis le côté transversalement à l'axe longitudinal (76) et est appliquée, sous une pression élastique, contre une paroi intérieure de corps (20) au moins en deux points (24, 26) dont le premier point (24) se trouve sur l'axe longitudinal (76) et le second point (26) est décalé depuis le côté par rapport à l'axe longitudinal.

2. Rétroviseur conforme à la revendication 1, caractérisé en ce que l'hémisphère (18) est réalisé d'une seule pièce avec le corps (10).

3. Rétroviseur conforme à la revendication 1 ou 2, caractérisé en ce que la paroi intérieure de corps (20) s'étend dans la cavité de l'hémisphère (18), l'extrémité élargie (84) étant poussée par un ressort (96) contre la paroi intérieure du corps.

4. Rétroviseur conforme à l'une des revendications précédentes, caractérisé en ce que l'extrémité libre (82) est reliée à une pièce d'ancrage (88) qui traverse la paroi intérieure de corps (20) et qui supporte la pièce antagoniste (90), un ressort (96) étant prévu entre la paroi intérieure de corps (20) et la pièce antagoniste (90).

5. Rétroviseur conforme à l'une des revendications précédentes, caractérisé en ce que l'extrémité libre est conçue sous la forme d'une fourchette (84) dont les extrémités s'engagent dans des logements (24, 26) de la paroi intérieure de corps (20).

6. Rétroviseur conforme à l'une des revendications précédentes, caractérisé en ce qu'un talon (98), faisant saillie sur la trajectoire de l'extrémité de fourchette (84) déportée vers l'avant par rapport à l'axe longitudinal (76), dépasse de la face intérieure de l'hémisphère (18).

FIG. 1

FIG. 2

10

14    12

84  82
20  18  50
98  54  56  80  75
90  94  88  28  26
E
R
72
73
78
76
74
48 64
52  86
22  24
92  96  16  30
70

_Schnitt C-C_

65
54  58  64  76
20  18
78
59
FIG. 3    22  74

_Schnitt E-E_

0 214 337

FIG. 4